# EUROPÄISCHE PATENTSCHRIFT

(11) **EP 2 276 999 B1**
(45) Veröffentlichungstag und Bekanntmachung des Hinweises auf die Patenterteilung: **10.06.2015**
(21) Anmeldenummer: 09738008.3
(22) Anmeldetag: 16.04.2009
(51) Int. Cl.: G01B 9/02

(54) **OPTISCHE ANORDNUNG ZUR BELEUCHTUNG EINES MESSOBJEKTES UND INTERFEROMETRISCHE ANORDNUNG ZUR VERMESSUNG VON FLÄCHEN EINES MESSOBJEKTES**
OPTICAL ARRANGEMENT FOR ILLUMINATING A MEASURED OBJECT, AND INTERFEROMETRIC ARRANGEMENT FOR MEASURING SURFACES OF A MEASURED OBJECT
AGENCEMENT OPTIQUE D'ÉCLAIRAGE D'UN OBJET DE MESURE ET AGENCEMENT INTERFÉROMÉTRIQUE POUR LE MESURAGE DE SURFACES D'UN OBJET DE MESURE

(30) Priorität: 30.04.2008 DE 102008001473
(43) Veröffentlichungstag der Anmeldung: 26.01.2011
(73) Patentinhaber: Robert Bosch GmbH, 70442 Stuttgart (DE)
(72) Erfinder: FLEISCHER, Matthias, 73760 Ostfildern (DE); DRABAREK, Pawel, 75233 Tiefenbronn (DE)
(86) Internationale Anmeldenummer: PCT/EP2009/054513
(87) Internationale Veröffentlichungsnummer: WO 2009/132964

(56) Entgegenhaltungen:
- FR-A- 1 153 098
- US-A- 2 841 049
- US-A- 3 597 091
- "INTERFEROMETER MEASURES BOTH SIDES OF DISK" LASER FOCUS WORLD, PENNWELL, TULSA, OK, US, 1. September 1997 (1997-09-01), Seite 52/53, XP001182916 ISSN: 1043-8092

## Beschreibung

### Stand der Technik

Die Erfindung betrifft eine optische Anordnung zur Beleuchtung von mindestens einer Fläche eines Messobjektes gemäß dem Oberbegriff des unabhängigen Anspruchs 1 und eine interferometrische Anordnung zur Vermessung von Flächen eines Messobjektes gemäß abhängigem Anspruch 15.

Aus der Anmeldung DE-OS 10 2004 045 806 A1 ist eine interferometrische Messvorrichtung zur Vermessung eines Objektes, insbesondere zur Dickenmessung des Objektes, bekannt. Beschrieben ist ein Aufbau eines Interferometers nach Michelson mit einer Lichtquelle, einem Strahlteiler zum Bilden von Referenzstrahlen und Objektstrahlen, einem Referenzspiegel im Referenzlichtweg und einem Bildaufnehmer. Im Objektlichtweg ist ein Spezialobjektiv angeordnet. Dieses teilt die Objektstrahlen in zwei Teilobjektstrahlen.

Beide Teilobjektstrahlen sind jeweils auf einen Ablenkspiegel gerichtet. Die an den Spiegeln abgelenkten Teilobjektstrahlen werden zur gleichzeitigen, senkrechten Beleuchtung von zwei parallel zueinander liegenden Objektflächen verwendet. Die an den Objektflächen reflektierten Teilobjektstrahlen werden mit den Referenzstrahlen überlagert und treffen auf den Bildaufnehmer der Messvorrichtung. Dabei kommt es bei der Überlagerung zu Interferenzerscheinungen, wenn die Referenzstrahlen und die reflektierten Teilobjektstrahlen eine gleiche optische Weglänge aufweisen. Der Bildaufnehmer erfasst dann die sich gebildeten Intereferenzmuster. Diese optische Weglänge, bei der Interferenzen auftreten, wird jeweils für die reflektierten Teilobjektstrahlen einer Objektfläche ermittelt. Das erfolgt, indem der Referenzspiegel bis zur Ausbildung von Referenzmustern im Referenzlichtweg verschoben wird. Aufgrund der ermittelten optischen Weglängen für beide Teilobjektstrahlen schließt man auf den Abstand beider Objektflächen zueinander und somit auf die Dicke des Objektes an der Stelle der gemessenen Objektflächen.

Die Aufteilung der Objektstrahlen im Spezialobjektiv in zwei Teilobjektstrahlen erfolgt in Form einer Aperturteilung. Dabei werden zwei in sich zusammenhängende Teilquerschnitte der Objektstrahlen jeweils in zwei Teilobjektstrahl mit einem eigenen Strahlengang abgetrennt. Die dann an den Objektflächen reflektierten Teilobjektstrahlen werden richtungsgleich an der Stelle der erfolgten Aperturteilung wieder zusammengeführt.

Dabei weisen die zusammengeführten Objektstrahlen in sich zusammenhängende, nicht überlappende Teilquerschnitte auf, die ausschließlich durch reflektierte Teilobjektstrahlen einer Objektfläche durchlaufen werden. Dies hat zur Folge, dass nur eine bestimmte Teilfläche eines in der Regel quadratischen Bildaufnehmers ausschließlich durch die jeweiligen reflektierten Teilobjektstrahlen einer Objektfläche belichtet wird. Demnach sind die gemessenen Objektflächen von einander getrennt auf den jeweiligen Teilbereichen des Bildaufnehmers abgelichtet. Somit wird eine eindeutige Zuordnung der Messsignale auf einer Teilfläche des Bildaufnehmers zu den gemessenen Objektflächen ermöglicht.

FR1153098A, US2841049A und US3597091 A offenbaren jeweils eine interferometrische Anordnung mit einer optischen Anordnung, welche bereits selbst als Interferometer ausgebildet ist. Der erste Strahlengang der an der ersten Oberfläche reflektierten Lichtstrahlen und der zweite Strahlengang der an der zweiten Objektfläche reflektierten Lichstrahlen decken sich in einem Bereich mit parallel zueinander orientierter Strahlrichtung. Dabei treten in diesem Bereich Interferenzerscheinungen auf.

### Offenbarung der Erfindung

Der Erfindung liegt die Aufgabe zu Grunde, eine optische Anordnung zur Beleuchtung von mindestens einer Fläche eines Messobjektes vorzuschlagen, bei der sich ein Strahlengang von an einer ersten Objektfläche reflektierten Lichtstrahlen zumindest teilweise mit einem Strahlgang von an einer zweiten Objektfläche reflektierten Lichtstrahlen decken, wobei alle Lichtstrahlen im Bereich der Überdeckung in eine gleiche Richtung orientiert sind.

Ferner ist es Aufgabe eine optische Anordnung in einer interferometrischen Messanordnung anzuordnen, wobei gemessene Objektflächen zumindest teilweise auf eine gleiche bestrahlte Fläche eines Detektors, beispielsweise einen Bildaufnehmer, abgelichtet werden.

Diese Aufgaben werden erfindungsgemäß gelöst mit einer optischen Anordnung zur Beleuchtung von mindestens einer Objektfläche gemäß Anspruch 1 und einer interferometrischen Anordnung zur Vermessung von Objektflächen gemäß abhängigem Anspruch 15.

Die erfindungsgemäße optische Anordnung zur Beleuchtung von mindestens einer Objektfläche sieht zumindest ein erstes optisches Element vor, welches bei eingeleiteten Lichtstrahlen einer strahlungserzeugenden Lichtquelle mindestens einen ersten und mindestens einen zweiten Strahlengang ausbildet. Dabei sind die Lichtstrahlen im ersten Strahlengang über ein im Lichtweg dem ersten optischen Element nachgeschaltetes zweites optisches Element auf eine erste Objektfläche senkrecht gerichtet. Ferner sind Lichtstrahlen im zweiten Strahlengang über ein im Lichtweg dem ersten optischen Element nachgeschaltetes drittes optisches Element auf eine zweite Objektfläche senkrecht gerichtet.

In vorteilhafter Weise entstammen die Lichtstrahlen im ersten Strahlengang aus einem möglichst großen Bereich des Querschnitts der auf das erste optische Element eingeleiteten Lichtstrahlen, bevorzugt aus dem kompletten Querschnitt. Des Weiteren entstammen auch die Lichtstrahlen im zweiten Strahlengang aus einem möglichst großen Bereich des Querschnitts der auf das erste optische Element eingeleiteten Lichtstrahlen, ebenfalls bevorzugt aus dem kompletten Querschnitt.

Daneben können noch weitere optische Elemente zur Strahlführung der eingeleiteten Lichtstrahlen, der Lichtstrahlen im zumindest ersten Strahlengang und/oder der Lichtstrahlen im zumindest zweiten Strahlengang angeordnet sein. Gemeint ist hierbei die Strahlführung der Lichtstrahlen zu einer Objektfläche und/oder der reflektierten Lichtstrahlen von der jeweiligen Objektfläche weg.

Die zumindest angenähert senkrecht auf die Objektflächen) gerichteten und dann reflektierten Lichtstrahlen durchlaufen den zuvor jeweils zu einer Objektfläche gebildeten ersten und/oder zweiten Strahlengang dann entgegengerichtet zurück.

In vorteilhafter Weise sind zumindest jeweils auf einem Längsabschnitt ihres Lichtweges die reflektierten Lichtstrahlen im ersten Strahlengang und die reflektierten Lichtstrahlen im zweiten Strahlengang parallel zueinander orientiert.

Der erste und der zweite Strahlengang der reflektierten Lichtstrahlen weisen zumindest eine teilweise räumliche Überdeckung auf.

Innerhalb dieser Überdeckung sind die reflektierten Lichtstrahlen aus dem ersten und zweiten Strahlengang parallel zueinander orientiert.

Dies bedeutet, dass die räumliche Überdeckung der Strahlengänge sowohl durch die reflektierten Lichtstrahlen aus dem ersten Strahlengang als auch durch die reflektierten Lichtstrahlen aus dem zweiten Strahlengang durchlaufen werden. Bevorzugt wird die Überdeckung der Strahlengänge der reflektierten Lichtstrahlen durch die Anordnung des mindestens ersten optischen Elements eingeleitet. Besonders vorteilhaft ist eine vollständige Überdeckung der Strahlengänge der reflektierten Lichtstrahlen. In vorteilhafter Weise entspricht die Überdeckung im Querschnitt dem gesamten Querschnitt der in die optische Anordnung eingeleiteten Lichtstrahlen.

Bevorzugt wird die erfindungsgemäße optische Anordnung in einem Messstrahlengang eines Interferometer-Messkopfes angeordnet. Somit werden die Messstrahlen in die erfindungsgemäße optische Anordnung eingeleitet und dann zur Beleuchtung der Objektflächen genutzt. Auf diese Wiese erhält man in günstiger Weise eine erfindungsgemäße interferometrische Anordnung zur Vermessung von Objektflächen.

Die erfindungsgemäße interferometrische Anordnung hat den Vorteil gegenüber dem Stand der Technik, dass in idealer Weise ein großes Messfeld als beleuchtete Objektfläche realisiert werden kann. Insbesondere dann, wenn der gesamte Querschnitt der innerhalb der erfindungsgemäßen optischen Anordnung eingeleiteten Messstrahlen jeweils zur Bildung des mindestens ersten und/oder des mindestens zweiten Strahlenganges genutzt wird.

Von besonders großem Vorteil ist, dass zur Abbildung der jeweils gemessenen Objektfläche auf einem Detektor eine große Detektorfläche, bevorzugt die gesamte Detektorfläche, genutzt werden kann. Dies wird dadurch ermöglicht, indem die Strahlengänge der an den Objektflächen reflektierten Lichtstrahlen sich zumindest teilweise, bevorzugt vollständig überdecken und die reflektierten Lichtstrahlen dann bevorzugt mittig zentriert auf die Detektorfläche treffen. Das bedeutet, dass zumindest teilweise gleiche Bereiche der Detektorfläche bei der Vermessung einer ersten Objektfläche und einer zweiten Objektfläche belichtet werden können. So kann in vorteilhafter Weise bei der Vermessung von kreisförmigen Objektflächen im Vergleich zum Stand der Technik eine vier Mal so große Fläche des Detektors zur Abbildung genutzt werden.

In vorteilhafter Weise verdoppelt sich damit auch die laterale Auflösung bei der Vermessung einer Objektfläche mit einer erfindungsgemäßen interferometrischen Anordnung. Dies bedeutet, dass die Messung der gleichen Objektflächen wesentlich genauer erfolgt, als das mit einer bisher bekannten Messvorrichtung der Fall ist. Es ist ebenso möglich bei mindestens einer gleichen Messgenauigkeit und/oder mindestens einer gleichgroßen zu vermessenden Objektfläche einen kleineren Detektor zu verwenden. Umgekehrt ist es auch möglich, die Detektorgröße beizubehalten, stattdessen den Querschnitt der in die erfindungsgemäße optische Anordnung eingeleiteten Messstrahlen zu verkleinern. Dadurch werden die zu vermessenden Objektflächen in günstiger Weise mit einer größeren Lichtintensität beleuchtet. Somit können auch bei schlecht reflektierenden Objektflächen deren Abbildung auf dem Detektor erzielt werden.

Durch die in den abhängigen Ansprüchen aufgeführten Maßnahmen sind vorteilhafte Weiterbildungen und Verbesserungen der im unabhängigen Anspruch angegebenen Anordnung möglich.

So können in Weiterbildung der erfindungsgemäßen optischen Anordnung zur Beleuchtung von mindestens einer Fläche eines Messobjektes die optischen Elemente derart angeordnet sein, dass die auf die erste Objektfläche gerichteten Lichtstrahlen parallel oder antiparallel zu den auf die zweite Objektfläche gerichteten Lichtstrahlen orientiert sind. Demnach können parallel zueinander angeordnete Objektflächen beleuchtet werden. Innerhalb einer erfindungsgemäßen interferometrischen Anordnung kann in idealer Weise dann der Abstand beider Objektflächen zueinander vermessen werden. Bei entgegengerichteten parallelen Objektflächen lässt sich somit die Dicke des Objektes an der Stelle der gemessenen Objektflächen bestimmen. Ebenso lässt sich die Parallelität der Objektflächen zueinander prüfen.

Besonders vorteilhaft ist, wenn in Weiterführung der erfindungsgemäßen optischen Anordnung zumindest ein optisches Element ein Strahlteiler ist. In günstiger Weise kann dann die Strahlführung der auf den Strahlteiler einfallenden Lichtstrahlen so beeinflusst werden, dass die Lichtstrahlen geteilt werden und somit zumindest Lichtstrahlen in einem ersten und zumindest Lichtstrahlen in einem zweiten Strahlengang gebildet werden. Unter einem Strahlteiler ist hierbei ein optisches Element zu verstehen, bei dem Lichtstrahlen in dem zumindest ersten gebildeten Strahlengang und im zumindest zweiten gebildeten Strahlengang aus zumindest einem gleichen Querschnittsbereich der auf den Strahlteiler eingeleiteten Lichtstrahlen entstammen, bevorzugt aus dem gesamten Querschnitt. Ein sehr einfacher derartiger Strahlteiler ist eine teilverspiegelte Glasscheibe, die beispielsweise in einem Winkel von 45° zu den eingeleiteten Lichtstrahlen angeordnet ist. Ein Teil der auftreffenden Lichtstrahlen wird an der Objektfläche der Scheibe im Winkel von 90° reflektiert, ein weiterer Teil durchdringt die Scheibe. In seiner verbreiteten Form besteht ein derartiger Strahlenteiler aus zwei Prismen, die an ihrer Basis (z. B. mit einem optischen Kleber wie beispielsweise dem UV-Kleber Norland Optical Adhesive 63) zusammengekittet sind.

Eine bevorzugte Ausführungsform sieht vor, dass das erste optische Element zur Bildung mindestens eines ersten und mindestens eines zweiten Strahlenganges ein Strahlteiler ist. In vorteilhafter Weise werden dann die zumindest erste und die zumindest zweite Objektfläche gleichzeitig beleuchtet.

Eine Ausführungsvariante sieht weiterhin vor, einen Strahlteiler zu verwenden, bei dem die Lichtstrahlen im gebildeten ersten Strahlengang vorzugsweise rechtwinklig zu den auf den Strahlteiler einfallenden Lichtstrahlen orientiert sind. Ferner wird ein Strahlteiler vorgeschlagen, bei dem die Lichtstrahlen im gebildeten zweiten Strahlengang gleichgerichtet und ohne Ablenkung zu den auf den Strahlteiler einfallenden Lichtstrahlen gerichtet sind. Bevorzugt wird dann eine solche vorgeschlagene optische Anordnung innerhalb einer erfindungsgemäßen interferometrischen Anordnung derart positioniert ist, dass die optische Achse des gebildeten zweiten Strahlengangs auf der optischen Achse der im interfermoetrischen System gebildeten Messstrahlen liegt.

Generell vorteilhaft ist für eine erfindungsgemäße optische Anordnung, wenn zumindest ein optisches Element ein Spiegel oder ein Prisma ist, um beispielsweise Lichtstrahlen durch Reflektion in eine bevorzugte Strahlrichtung abzulenken. Lichtablenkungen infolge von Lichtbrechung innerhalb des Prismas sind vorzugsweise zu vermeiden. Ansonsten erfolgt zusätzlich eine spektrale Aufspaltung des Lichts. Bei einer erfindungsgemäßen interferometrischen Anordnung mit einer derart eingesetzten optischen Anordnung kann es zu abweichenden Messergebnissen führen.

Eine weitere vorteilhafte Ausführungsform der erfindungsgemäßen optischen Anordnung schlägt vor, als dem ersten optischen Element nachgeschaltetes zweites und/oder drittes optisches Element einen Spiegel und/oder ein Prisma einzusetzen. Bevorzugt ist der Einsatz von Prismen, insbesondere dann, wenn eine derart vorgeschlagene optische Anordnung innerhalb einer erfindungsgemäßen interferometrischen Anordnung eingesetzt wird. Interferometrische Systeme weisen in der Regel eine fixe-sogenannte - Arbeitslänge auf. Bei dieser Arbeitslänge handelt es sich dabei um den maximalen zurückgelegten optischen Weg von an einer Objektfläche reflektierten Messstrahlen, bei dem über das Objektiv noch eine fokussierte Abbildung der Objektfläche auf dem Detektor erzielt werden kann. In vorteilhafter Weise verlängern Prismen diesen Arbeitsweg um 1/3 ihres durchlaufenden Glasweges. Zusätzlich ist die Gefahr von im Strahlengang auftretenden Luftströmungen reduziert, die in der Regel das Messergebnis negativ beeinflussen.

Von allgemeinem Vorteil für eine erfindungsgemäße optische Anordnung ist, wenn zumindest ein optisches Element zur Brechung der Lichtstrahlen eine Linse oder ein Linsensystem ist. In vorteilhafter Weise kann dann der Querschnitt der Lichtstrahlen in Richtung des Lichtweges verkleinert werden. Dadurch kann die Lichtintensität im anschließenden Strahlengang vergrößert werden. Ebenso ist es möglich den Querschnitt der Lichtstrahlen zu vergrößern. Insgesamt kann dadurch beispielsweise erreicht werden, dass eine größere Objektfläche beleuchtet werden kann.

Generell günstig für eine erfindungsgemäße optische Anordnung sind optische Elemente, die Lichtstrahlen durch Reflektion in mehr als eine Strahlrichtung auslenken können. Beispielsweise ist das möglich, indem das optische Element drehbar angeordnet ist. Insbesondere vorteilhaft ist ein drehbar angeordnetes erstes optisches Element, beispielsweise ein Spiegel oder ein Prisma. Dadurch ist es möglich in einer entsprechenden Drehstellung ausschließlich eine Objektfläche zu beleuchten. Dabei werden bevorzugt alle auf das drehbare erste optische Element einfallenden Lichtstrahlen über beispielsweise das zweite optische Element bevorzugt ausschließlich auf die erste Objektfläche gerichtet. Durch eine veränderte Drehstellung kann dann in gleicher Weise bevorzugt ausschließlich die zweite Objektfläche beleuchtet werden.

Eine derartig vorgeschlagene optische Anordnung innerhalb einer erfindungsgemäßen interferometrischen Anordnung hat den Vorteil, dass für eine Objektmessung immer nur eine Objektfläche auf dem Detektor abgelichtet werden kann. Damit ist eine klare Zuordnung der Messsignale des Detektors zur gemessenen Objektfläche gegeben. Dadurch, dass dann alle in die optische Anordnung eingeleiteten Messstrahlen zur Beleuchtung der Objektfläche genutzt werden können, ergibt sich eine vorteilhafte große Lichtausbeutung für den Messvorgang.

Generell vorteilhaft für eine erfindungsgemäße optische Anordnung sind optische Elemente, die aus dem durch das erste optische Element mindestens ersten oder mindestens zweiten gebildeten Strahlengang weggeklappt werden können. In günstiger Weise erfolgt das in einer solchen Art, dass sie nicht mehr an einer Strahlführung der Lichtstrahlen beteiligt sind. Besonders bevorzugt sind dabei Spiegel und/oder Prismen. Dadurch ist es möglich in einer solchen Anordnung der optischen Elemente ausschließlich jeweils eine Objektfläche zu beleuchten. So können beispielsweise Lichtstrahlen in einem ersten Strahlengang auf eine erste Fläche gerichtet sein. Gleichzeitig wird die Beleuchtung der zweiten Objektfläche ausgesetzt, indem beispielsweise das zweite optische Element aus dem zweiten Strahlengang weggeklappt ist. Dadurch sind die Lichtstrahlen im zweiten Strahlengang nicht mehr auf die zweite Objektfläche gerichtet.

Eine derartig vorgeschlagene erfindungsgemäße optische Anordnung innerhalb einer erfindungsgemäßen interferometrischen Anordnung hat den Vorteil, dass für eine Objektmessung immer nur eine Objektfläche auf dem Detektor abgelichtet werden kann. Damit ist eine eindeutige Zuordnung der Messsignale des Detektors zur gemessenen Objektfläche gegeben.

### Zeichnung

Ausführungsbeispiele der Erfindung sind in der Zeichnung dargestellt und in nachfolgender Beschreibung näher beschrieben. Es zeigen:
- Fig. 1: schematisch eine erste Ausführungsform einer erfindungsgemäßen interferometrischen Messanordnung mit einer optischen Anordnung zur Beleuchtung vom mindestens einer Fläche eines Messobjektes im Längsschnitt,
- Fig. 2a: schematisch eine Ausführungsvariante einer optischen Anordnung mit einer Blende in einer ersten Stellung innerhalb einer interferometrischen Anordnung im Längsschnitt,
- Fig. 2b: die Ausführungsvariante aus Fig. 2a mit einer zweiten Stellung der Blende im Längsschnitt.

### Beschreibung der Ausführungsbeispiele

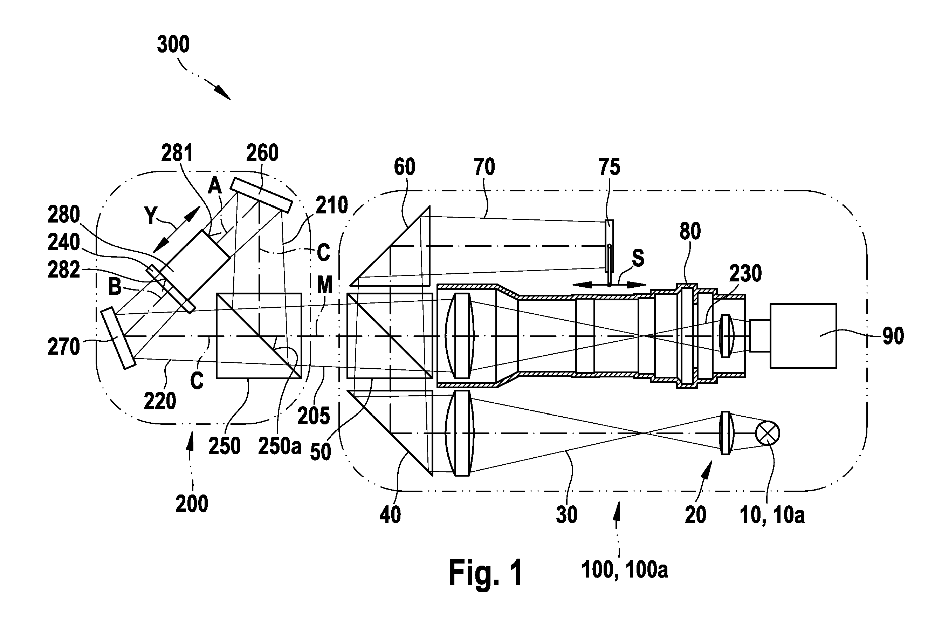

In Fig. 1 ist eine erste Ausführungsform einer erfindungsgemäßen interferometrischen Anordnung 300 zu Vermessung von Objektflächen gezeigt. Dabei ist mit 100 ein Interferometer - Messkopf bezeichnet. Der Interferometer - Messkopf 100 ist dabei in Form eines flächenhaft messenden Interferometers aufgebaut. Der Aufbau enthält eine strahlungserzeugende Lichtquelle 10, welche kurzkohärente Lichtstrahlen, beispielsweise Weißlicht, in eine Beleuchtungsoptik 20 ausstrahlt. Dadurch wird ein Beleuchtungsstrahlengang 30 gebildet. Ein im Beleuchtungsstrahlengang 30 angeordnetes erstes Dachprisma 40 bewirkt eine Ablenkung der Lichtstrahlen derart, dass die Lichtstrahlen senkrecht auf einen ersten Strahlteiler 50 gerichtet sind. Der erste Strahlteiler 50 bewirkt eine Teilung der Lichtstrahlen in einen Teil von Referenzstrahlen innerhalb eines Referenzstrahlengangs 70 und in einen Teil von Messstrahlen innerhalb eines Messstrahlenganges 205. Dabei sind die Referenzstrahlen in die gleiche Richtung und die Messstrahlen im rechten Winkel zu den auf den Strahlteiler 50 eintreffenden Lichtstrahlen des Beleuchtungsstrahlenganges 30 orientiert. Die Referenzstrahlen werden über ein im Referenzstrahlengang 70 angeordnetes zweites Dachprisma 60 derart abgelenkt, dass sie senkrecht auf ein Referenzelement 75, beispielsweise einen Referenzspiegel, gerichtet sind. Die dann am Referenzelement 75 reflektierten Referenzstrahlen durchlaufen somit den Referenzstrahlengang 70 über das Dachprisma 60 bis zum Strahlteiler 50 entgegengerichtet wieder zurück. Durch eine weitere rechtwinklige Ablenkung durch den Strahlteiler 50 sind die Referenzstrahlen letztendlich durch ein im Lichtweg angeordnetes Objektiv 80 hindurch senkrecht auf einen Detektor 90, beispielsweise ein fotoempfindliches Element einer Kamera, gerichtet. Die Strahlrichtung der auf dem Detektor 90 auftreffenden Referenzstrahlen ist entgegengerichtet zu der der vom ersten Strahlteiler 50 gebildeten Messstrahlen.

In den Messstrahlengang 205 des Interferometer - Messkopfes 100 ist eine erfindungsgemäße optische Anordnung 200 angeordnet. Dabei sind die Messstrahlen auf einen zweiten Strahlteiler 250 gerichtet. In vorteilhafter Weise deckt sich dabei die optische Achse des Messstrahlenganges 205 mit der optischen Achse des zweiten Strahlteilers 250. Ein Versatz der optischen Achsen ist zulässig, insbesondere bis zu einem Versatzmaß, bei dem sichergestellt ist, dass die Messstrahlen mit dem gesamten Querschnitt des Messstrahlenganges 205 auf den zweiten Strahlteiler 250 treffen. Der zweite Strahlteiler 250 entspricht einem ersten optischen Element innerhalb der optischen Anordnung 200 zur Bildung eines ersten Strahlenganges 210 und eines zweiten Strahlenganges 220. Dabei sind Lichtstrahlen im ersten Strahlengang 210 rechtwinklig zu den Messstrahlen orientiert, die Lichtstrahlen im zweiten Strahlengang 220 dagegen verlaufen in geradliniger Verlängerung zu den auf den zweiten Strahlteiler 250 auftreffenden Messstrahlen.

Die Lichtstrahlen können sowohl im ersten Strahlengang 210 als auch im zweiten Strahlengang 220 in vorteilhafter Weise aus dem gesamten Querschnitt des Messstrahlengangs 205 entstammen. Demnach handelt es sich bei den Lichtstrahlen innerhalb des ersten und des zweiten Strahlenganges 210, 220 weiterhin um Messstrahlen mit jeweils durch die Teilung dann geringere Lichtintensität. Außerdem entspricht der Querschnitt des ersten und des zweiten Strahlengangs 210, 220 in günstiger Weise dem Querschnitt des Messstrahlengangs 205.

Im ersten Strahlengang 210 ist ein erster Spiegel 260 derart angeordnet, dass Messstrahlen durch Reflektion dann senkrecht auf eine erste Objektfläche 281 eines Messobjektes 280 gerichtet sind. Ebenso ist im zweiten Strahlengang 220 ein zweiter Spiegel 270 derart angeordnet, dass Messstrahlen auf eine zweite Objektfläche 282 des Messobjektes 280 gerichtet sind. Dabei ist das Messobjekt 280 mit der zweiten Objektfläche 282 auf einen strahlungsdurchlässigen Träger 240 aufliegend angeordnet. Demnach ist die vorgeschlagene interferometrische Anordnung 300 im Raum derart positioniert, dass die erste Objektfläche 281 in vertikaler Raumrichtung y von oben beleuchtet wird und die zweite Objektfläche 282 in vertikaler Raumrichtung y von unten durch den strahlungsdurchlässigen Träger 240 hindurch beleuchtet wird. Die an der ersten und an der zweiten Objektfläche 281, 282 reflektierten Messstrahlen durchlaufen dann den ersten und den zweiten Strahlengang 210, 220 über den ersten und den zweiten Spiegel 260, 270 bis zum zweiten Strahlteiler 250 entgegengerichtet zurück. Die reflektierte Messstrahlen aus dem zweiten Strahlengang 220 werden ohne Ablenkung dann achsparallel in das Objektiv 80, beispielsweise ein telezentrisches Objektiv, eingeleitet und senkrecht auf den Detektor 90 gerichtet. Die Messstrahlen im ersten Strahlengang 210 dagegen werden durch den zweiten Strahlteiler 250 rechwinklig zu ihrer bisherigen Strahlrichtung abgelenkt und dann achsparallel in das Objektiv 80 eingeleitet und ebenfalls senkrecht auf den Detektor 90 gerichtet.

Der Strahlengang der an der ersten Objektfläche 281 reflektierten Messstrahlen und der Strahlengang der an der zweiten Objektfläche 282 reflektierten Messstrahlen sind innerhalb des Abbildungsstrahlenganges 230 des Objektives 80 deckungsgleich. Die auf den Detektor 90 auftreffenden reflektierten Messstrahlen interferieren mit den ebenfalls im Abbildungsstrahlgang 230 enthaltenen und auf den Detektor 90 auftreffenden Referenzstrahlen.

Das Messobjekt 280 wird innerhalb der optischen Anordnung 200 derart angeordnet, dass die auf die erste Objektfläche 281 auftreffenden und dann reflektierten Messstrahlen und die auf die zweiten Objektfläche 282 auftreffenden und ebenfalls reflektierten Messstrahlen unterschiedliche optische Wege durchlaufen. Die gesamte Wegdifferenz beider optischer Weglängen ist größer als die Kohärenzlänge der Lichtquelle 10. Damit wird verhindert, dass die von der ersten Objektfläche 281 und zweiten Objektfläche 282 reflektierten Messstrahlen miteinander interferieren. Eine Interferenz mit den Referenzstrahlen erfolgt dann, wenn die optische Weglänge der Messstrahlen mit der optischen Weglänge der Referenzstrahlen übereinstimmt. Die optische Weglänge der Referenzstrahlen lässt sich vergrößern oder verkleinern, indem das Referenzelement 75 verschiebbar auf der optischen Wegachse der Referenzstrahlen angeordnet wird. Eine Veränderung und Anpassung der optischen Weglänge für die Messstrahlen der ersten Objektfläche 281 oder der zweiten Objektfläche 282 wird bevorzugt durch eine relative Verschiebung des Interferometer - Messkopfes 100 und der optischen Anordnung 200 in Richtung der optischen Achse M erreicht. Eine alternative Ausführungsvariante sieht vor, dass der erste Spiegel 260, der zweite Spiegel 270 und/oder der zweite Strahlteiler 250 relativ zum Messobjekt jeweils verschiebbar in Richtung ihrer optischen Achse A, B, C angeordnet sind, ggf. zusätzlich mit einer möglichen Verschiebung des Interferometer - Messkopfes 100.

Der Abstand der ersten Objektfläche 281 zur zweiten Objektfläche 282 entspricht der Objektdicke. Bevor die Objektdicke eines Messobjektes 280 durch einen Messvorgang ermittelt wird, wird die interferometrische Anordnung 300 in einem ersten Schritt mit einem Endmaß bekannter Dicke kalibriert. Das Endmaß wird anstelle des Messobjektes 280 auf den Träger 240 positioniert. Der Interferometer - Messkopf 100 wird in die Position verschoben, bei der der optische Weg von der strahlteilenden Fläche 250a des zweiten Strahlteilers 250 bis zur ersten Objektfläche 281 dem optischen Weg von der strahlteilenden Fläche 250a des zweiten Strahlteilers 250 bis zum Referenzelement 75 entspricht. In dieser Position interferieren die an der ersten Objektfläche 281 reflektierten Messstrahlen mit den Referenzstrahlen, so dass ein entsprechendes erstes Interferenzmuster auf dem Detektor 90 sichtbar wird. Das Endmaß ist so positioniert, dass der optische Weg von der strahlteilenden Fläche 250a des zweiten Strahlteilers 250 zur zweiten Objektfläche 282 geringfügig länger oder kürzer ist, als die optische Weglänge der Referenzstrahlen. Somit kommt es zu keiner Interferenz der an der zweiten Objektfläche 282 reflektierten Messstrahlen mit den Referenzstrahlen. Demnach ist auch kein zweites Interferenzmuster am Detektor 90 sichtbar. Erst durch Verschiebung beispielsweise des Referenzelementes 75 in Richtung der optischen Achse S des Referenzstrahlenganges 70 wird das zweite Referenzmuster am Detektor 90 sichtbar. Gleichzeitig ist das erste Referenzmuster am Detektor 90 nicht mehr sichtbar. Die Verschiebung beispielsweise des Referenzelementes 70 zwischen dem durch die erste Objektfläche 281 ausgebildetem ersten Interferenzmuster und dem durch die zweite Objektfläche 282 ausgebildeten zweiten Referenzmuster wird zum Beispiel mit einem hochgenauen Weggeber gemessen. Der dadurch ermittelte Verschiebeweg des Referenzelementes 75 wird als Kalibrierkonstante abgelegt. Anschließend wird das Messobjekt 280 in gleicher Weise vermessen und der Abstand des Referenzelementes 75 zwischen dem ersten ausgebildeten Interferenzmuster und dem zweiten Interferenzmuster ermittelt. Die Objektdicke wird dann aus der bekannten Dicke des Endmaßes, der zuvor ermittelten Kalibrierkonstante und dem für das Messobjekt ermittelten Abstand des Referenzelementes 75 berechnet.

Eine weitere Ausführungsform einer erfindungsgemäßen interferometrischen Anordnung sieht mindestens eine Lichtquelle 10a vor, welche langkohärentes Licht, beispielsweise Laserlicht, ausstrahlt. Der übrige Aufbau eines Interferometer - Messkopfes 100 bleibt unverändert.

Bei einem Einsatz einer Lichtquelle 10a mit langkohärenten Lichtstrahlen ist eine gleichzeitige Belichtung des Detektors 90 durch an der ersten Objektfläche 281 und der zweiten Objektfläche 282 reflektierten Messstrahlen zu unterbinden. Ansonsten kann es auch zu Interferenz zwischen den an der ersten Objektfläche 281 und der zweiten Objektfläche 282 reflektierten Messstrahlen trotz unterschiedlichen optischen Weglängen kommen. Dadurch werden keine Interferenzmuster ausgebildet, die beispielsweise durch das Verschieben des Referenzelementes 75 in Richtung der optischen Achse S eindeutig der ersten oder der zweiten Objektfläche 281, 282 zugeordnet werden können.

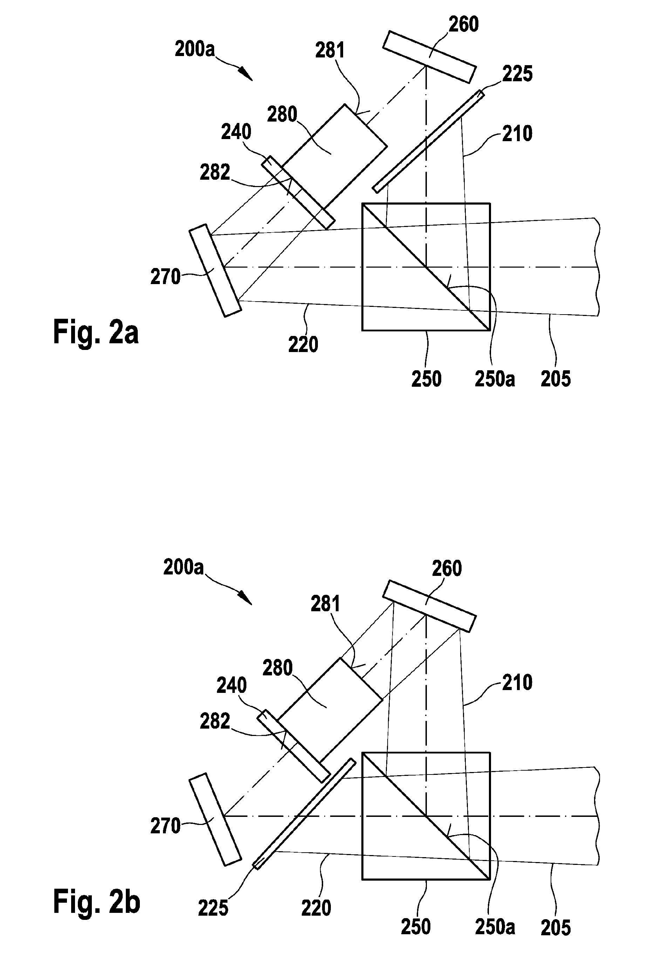

In einer ersten Ausführungsvariante einer interferometrischen Anordnung mit langkohärentem Licht ist eine Lichtquelle 10a derart vorgesehen, dass der Interferometer-Messkopf 100a als ein Mehrwellenlängen - Interferometer eingesetzt werden kann. Beispielsweise können hierzu zwei Laserstrahlen verwendeten werden, deren Wellenlängen im Vergleich zueinander eine sehr kleine Differenz aufweisen. In ähnlicher Weise kann eine derartige Lichtquelle 10a eingesetzt werden, so dass der Interferometer - Messkopf 100a als ein Interferometer mit verschiebbarer Wellenlänge realisiert ist. Dazu können zum Beispiel eine Laserquelle als Lichtquelle 10a vorgesehen werden, die auf verschiedene Laserfrequenzen abgestimmt werden kann. Bevorzugt wird dann bei dieser Ausführungsvariante einer interferometrischen Anordnung eine Ausführung einer optischen Anordnung 200a gemäß der Figur 2a in den Messstrahlengang 205 angeordnet. Dabei entspricht der Aufbau der optischen Anordnung 200a im Wesentlichen dem bereits beschriebenen Aufbau der optischen Anordnung 200 in Fig. 1. Im Unterschied dazu ist im ersten und im zweiten Strahlengang 210, 220 eine bewegliche Blende 225 vorgesehen. Bei der Vermessung der ersten Objektfläche 281 ist die Blende 225 in den zweiten Strahlengang 220 bevorzugt derart positioniert, dass keine Messstrahlen auf die zweite Objektfläche 282 auftreffen. Somit wird vorzugsweise ausschließlich die erste Objektfläche 281 auf dem Detektor 90 durch Interferenz mit den Referenzstrahlen abgebildet.

Entsprechend wird bei der Vermessung der zweiten Objektfläche 282 verfahren. Entsprechend der Fig. 2b ist die Blende 225 dann in den ersten Strahlengang 281 bevorzugt derart angeordnet, dass keine Messstrahlen auf die erste Objektfläche 281 auftreffen. Somit wird vorzugsweise ausschließlich die zweite Objektfläche 282 auf dem Detektor 90 durch Interferenz mit den Referenzstrahlen abgebildet. Auf diese Weise kann die Ebenheit, die Parallelität der beiden Objektflächen 281, 282 zueinander und die Objektdicke vermessen werden. Zur Ermittlung der Objektdicke wird bei der Vermessung der ersten Objektfläche 281 die Phasendifferenz der zwei in den Messstrahlen unterschiedlichen Anteilen von Laserstrahlen mit minimal unterschiedlichen Wellenlängen am Detektor 90 ermittelt. Dadurch kann die Anzahl der Perioden innerhalb des optischen Weges bestimmt werden, die zu einer solchen Phasenverschiebung führen. Demnach ist dann auch die zurückgelegte optische Weglänge der an der ersten Objektfläche 281 reflektierten Messstrahlen bekannt. Ebenso kann in gleicher Weise die zurückgelegte optische Weglänge der an der zweiten Objektfläche 282 reflektierten Messstrahlen ermittelt werden. Somit lässt sich in einfachster Weise auf die Objektdicke schließen.

Die interferometrischen Anordnung kann ferner variiert werden, indem die Lichtquelle 10a durch ein elektrisches Ein- und Ausschalten jeweils langkohärentes Licht mit einer ersten Lichtwellenlänge oder langkohärentes Licht mit einer zweiten Lichtwellenlänge ausstrahlt. Beispielsweise sind für die Bereitstellung von Lichtstrahlen mit unterschiedlichen Lichtwellenlängen zwei alternierend angesteuerte Lasereinheiten denkbar. Bevorzugt wird dann für die optische Anordnung 200 ein Aufbau verwendet, der im Wesentlichen dem bereits beschriebenen Aufbau der optischen Anordnung 200 in Fig. 1 entspricht. Im Unterschied dazu ist innerhalb des ersten Strahlenganges 210 ein erster Farbfilter zum Filtern der Messstrahlen mit der ersten Lichtwellenlänge angeordnet. In ähnlicher Weise ist im zweiten Strahlengang 220 ein zweiter Farbfilter zum Filtern der Messstrahlen mit der zweiten Lichtwellenlänge positioniert. So kann in Abhängigkeit, ob das Licht mit der ersten Lichtwellenlänge oder das Licht mit der zweiten Lichtwellenlänge zum Beleuchten eingeschaltet wird, entweder die erste Objektfläche 281 oder die zweite Objektfläche 282 auf dem Detektor 90 abgebildet wird. Alternativ kann anstelle der Farbfilter und dem zweiten Strahlteiler 250 ein dichroitischer (farbtrennender) Strahlteiler 250 als erstes optisches Element eingesetzt werden.

Eine zusätzliche Ausführungsvariante der interferometrischen Anordnung sieht eine Lichtquelle 10a vor, die durch ein elektrisches Ein- und Ausschalten jeweils langkohärentes Licht mit einer ersten Polarisationsrichtung oder langkohärentes Licht mit einer zweiten Polarisationsrichtung ausstrahlt. Zum Beispiel sind zwei alternierend angesteuerte Lasereinheiten denkbar, bevorzugt mit senkrecht zueinander polarisierten Laserstrahlen.

Besonders bevorzugt wird dann für die optische Anordnung 200 ein Aufbau verwendet, der im Wesentlichen dem bereits beschriebenen Aufbau der optischen Anordnung 200 in Fig. 1 entspricht. Im Unterschied dazu ist der eingesetzte zweite Strahlteiler 250 ein polarisierter Strahlteiler. So kann in Abhängigkeit, ob das Licht mit der ersten Polarisationsrichtung oder das Licht mit der zweiten Polarisationsrichtung zum Beleuchten eingeschaltet wird, entweder die erste Objektfläche 281 oder die zweite Objektfläche 282 auf dem Detektor 90 abgebildet werden.

Generell sind die bisher beschriebenen Ausführungsvarianten einer interferometrischen Anordnung zum Vermessen von Objektflächen 281, 282 mit langkohärenten Lichtstrahlen auch mit kurzkohärenten Lichtstrahlen möglich. Dadurch wird die Signalqualität positiv beeinflusst.

Ebenso gilt das für eine alternative Ausführungsform einer erfindungsgemäßen interferometrischen Anordnung zur Vermessung von Objektflächen mit kurzkohärenten oder mit langkohärenten Licht.

Der Aufbau entspricht im Wesentlichen dem Aufbau der interferometrischen Anordnung 300 in der Fig. 1. Im Unterschied hierzu kann die Lichtquelle 10 kurzkohärentes oder auch langkohärentes Licht ausstrahlen. In vorteilhafter Weise ist dann im Unterschied zur optischen Anordnung 200 anstelle des zweiten Strahlteilers 250 ein weiterer Spiegel eingesetzt, der bevorzugt aus dem Messstrahlengang 205 weggeklappt werden kann. So ist in einer ersten Stellung der Spiegel derart angeordnet, dass bevorzugt alle Messstrahlen aus dem Interferometer - Messkopf 100 auf den ersten Spiegel 260 gerichtet sind und somit die erste Objektfläche 281 beleuchten. In diesem Fall wird ausschließlich die erste Objektfläche 281 auf dem Detektor 90 abgebildet. In einer weiteren Stellung ist der Spiegel aus dem Messstrahlengang 205 vollkommen weggeklappt. In diesem Fall sind bevorzugt alle Messstrahlen aus dem Interferometer-Messkopf 100 auf den zweiten Spiegel 270 gerichtet und demnach bevorzugt ausschließlich die zweite Objektfläche 282 beleuchtet. Entsprechend ist bei dieser Strahlführung der Messstrahlen bevorzugt ausschließlich die zweite Objektfläche 282 auf dem Detektor 90 abgebildet.

## Patentansprüche

1. Optische Anordnung zur Beleuchtung mindestens einer Fläche (281, 282) eines Messobjektes (280) mit eingeleiteten Lichtstrahlen einer strahlenerzeugenden Lichtquelle (10), wobei ein erstes optisches Element (250) zur Bildung mindestens eines ersten und mindestens eines zweiten Strahlengangs (210, 220) derart angeordnet ist, dass Lichtstrahlen im mindestens ersten Strahlengang (210) durch ein dem ersten optischen Element (250) nachgeschaltetes zweites optisches Element (260) senkrecht auf eine erste Objektfläche (281) gerichtet sind und Lichtstrahlen im mindestens zweiten Strahlengang (220) durch ein dem ersten optischen Element (250) nachgeschaltetes drittes optisches Element (270) senkrecht auf eine zweite Objektfläche (282) gerichtet sind und wobei der mindestens erste Strahlengang (210) der an der ersten Objektfläche (281) reflektierten Lichtstrahlen und der mindestens zweite Strahlengang (220) der an der zweiten Objektfläche (282) reflektierten Lichtstrahlen sich in einem Bereich mit parallel zueinander orientierter Strahlrichtung zumindest teilweise decken
**dadurch gekennzeichnet, dass**
dieser Bereich frei von Interferenzerscheinungen ist.

2. Optische Anordnung nach Anspruch 1, wobei die Lichtstrahlen, die im mindestens ersten Strahlengang (210) senkrecht auf die erste Objektfläche (281) einfallen, parallel oder antiparallel zu den Lichtstrahlen, die im mindestens zweiten Strahlungsgang (220) senkrecht auf die zweite Objektfläche (282) einfallen, orientiert sind.

3. Optische Anordnung nach einem der Ansprüche 1 bis 2, wobei als optisches Element (250, 260, 270) mindestens ein Strahlteiler zur Teilung der einfallenden Lichtstrahlen in mindestens Lichtstrahlen in mindestens einem ersten Strahlengang (210) und Lichtstrahlen in einem mindestens zweiten Strahlengang (220).

4. Optische Anordnung nach einem der Ansprüche 1 bis 3, wobei als optisches Element (250, 260, 270) mindestens ein Spiegel zur Reflektion der einfallenden Lichtstrahlen verwendet wird.

5. Optische Anordnung nach einem der Ansprüche 1 bis 4, wobei als optisches Element (250, 260, 270) mindestens ein Prisma zur Reflektion der einfallenden Lichtstrahlen verwendet wird.

6. Optische Anordnung nach einem der Ansprüche 1 bis 5, wobei als optisches Element (250, 260, 270) mindestens eine Linse oder ein Linsensystem zur Brechung der einfallenden Lichtstrahlen verwendet wird.

7. Optische Anordnung nach einem der Ansprüche 4 und 5, wobei der Spiegel und/oder das Prisma aus dem mindestens ersten und/oder mindestens zweiten Strahlengang (210, 220) wegklappbar sind.

8. Optische Anordnung nach einem der Ansprüche 1 bis 7, wobei das erste optische Element (250) ein Strahlteiler ist, wobei die Lichtstrahlen im mindestens ersten Strahlengang (210) rechtwinklig zur Einfallsrichtung der auf den Strahlteiler (250) auftreffenden Lichtstrahlen abgelenkt sind und/oder die Lichtstrahlen im mindestens zweiten Strahlengang (220) in Richtung der auf den Strahlteiler (250) einfallenden Lichtstrahlen weiterführend ohne Ablenkung gerichtet sind.

9. Optische Anordnung nach einem der Ansprüche 1 bis 8, wobei das zweite und/oder dritte optisches Element (260, 270) ein Spiegel und/oder Prisma ist.

10. Optische Anordnung nach einem der Ansprüche 1 bis 9, wobei im mindestens ersten und/oder mindestens zweiten Strahlengang (210, 220) eine bewegliche Blende (225) angeordnet ist.

11. Optische Anordnung nach einem der Ansprüche 1 bis 10, wobei im mindestens ersten und/oder mindestens zweiten Strahlengang (210, 220) Farbfilter zum Filtern von Lichtstrahlen unterschiedlicher Wellenlänge angeordnet sind.

12. Optische Anordnung nach einem der Ansprüche 1 bis 11, wobei für das erste optische Element ein dichroitischer (farbtrennender) Strahlteiler (250) zur Trennung von Lichtstahlen mit unterschiedlicher Wellenlänge vorgesehen ist.

13. Optische Anordnung nach einem der Ansprüche 1 bis 12, wobei die optischen Elemente (250, 260, 270) und das Messobjekt (280) relativ zueinander beweglich angeordnet sind.

14. Optische Anordnung nach einem der Ansprüche 1 bis 13, wobei das Messobjekt (280) mit mindestens einer Objektfläche (281, 282) auf einem strahlendurchlässigen Träger (240), insbesondere einer Glasplatte, angeordnet ist.

15. Interferometrische Anordnung zur Vermessung von Flächen (281, 282) eines Messobjektes (280) mit einem Interferometer-Messkopf (100, 100a) und einer optischen Anordnung (200, 200a)zur Beleuchtung von mindestens einer Fläche eines Messobjektes gemäß einem der Ansprüche 1 bis 14, wobei eine strahlungserzeugende Lichtquelle (10, 10a), eine Beleuchtungsoptik (20) zur Bildung eines Beleuchtungsstrahlenganges (30), ein Strahlteiler (50) zur Teilung der von der Lichtquelle (10, 10a) ausgesandten Lichtstrahlen in Teillichtstrahlen, wobei Teillichtstrahlen zumindest als Messstrahlen in einem Messstrahlengang (205) zur Beleuchtung eines Messobjektes (280) und zumindest als auf ein Referenzelement (75) gerichtete Referenzstrahlen vorgesehen sind, ein Objektiv (80) zur Bildung eines Abbildungsstrahlengangs (230) der vom Messobjekt (280) reflektierten Messstrahlen und ein Detektor (90) zur Abbildung des Interferenzmusters aus der Überlagerung der vom Messobjekt (280) reflektierten Messstrahlen und den Referenzstrahlen enthalten ist, wobei die optische Anordnung (200, 200a) zur Beleuchtung von mindestens einer Fläche (281, 282) eines Messobjektes (280) im Messstrahlengang (205) des Interferometer-Messkopfes (100, 100a) angeordnet ist.

16. Interferometrische Anordnung nach Anspruch 15, wobei die Lichtquelle (10, 10a) kurzkohärentes Licht (Weißlicht) oder langkohärentes Licht ausstrahlt.

17. Interferometrische Anordnung nach einem der Ansprüche 15 bis 16, wobei die Lichtquelle (10, 10a) Lichtstrahlen mit mindestens zwei unterschiedlichen Wellenlängen ausstrahlt, insbesondere frequenzverschiebbar, wobei die Lichtstrahlen jeweils einer Wellenlänge ein- und ausschaltbar sind.

18. Interferometrische Anordnung nach einem der Ansprüche 15 bis 17, wobei die Lichtquelle (10, 10a) Lichtstrahlen mit mindestens zwei unterschiedlichen Polarisationsrichtungen ausstrahlt, vorzugsweise zwei senkrecht zueinander polarisierte Lichtstrahlen, wobei die Lichtstrahlen jeweils einer Polarisationsrichtung ein- und ausschaltbar sind.

19. Interferometrische Anordnung nach einem der Ansprüche 13 bis 16, wobei der Interferometer-Messkopf (100) und die optische Anordnung (200, 200a)relativ zueinander verschiebbar in Richtung der optischen Achse M der austretenden Messstrahlen angeordnet sind.

## Claims

1. Optical arrangement for illuminating at least one surface (281, 282) of a measurement object (280) using light beams input from a beam-generating light source (10), wherein a first optical element (250) for forming at least a first and at least a second beam path (210, 220) is arranged such that light beams in the at least first beam path (210) are directed perpendicularly onto a first object surface (281) by a second optical element (260), which is arranged downstream of the first optical element (250), and light beams in the at least second beam path (220) are directed perpendicularly onto a second object surface (282) by a third optical element (270), which is arranged downstream of the first optical element (250), and wherein the at least first beam path (210) of the light beams reflected at the first object surface (281) and the at least second beam path (220) of the light beams reflected at the second object surface (282) coincide at least partially in a region with a beam direction that is oriented mutually parallel, **characterized in that** this region is free of interference phenomena.

2. Optical arrangement according to Claim 1, wherein the light beams which are incident in the at least first beam path (210) perpendicularly on the first object surface (281) are oriented such that they are parallel or anti-parallel to those light beams that are incident in the at least second beam path (220) perpendicularly on the second object surface (282).

3. Optical arrangement according to one of Claims 1 to 2, wherein at least one beam splitter for splitting the incident light beams into at least light beams in at least a first beam path (210) and light beams in an at least second beam path (220) is used as optical element (250, 260, 270).

4. Optical arrangement according to one of Claims 1 to 3, wherein at least one mirror for reflecting the incident light beams is used as optical element (250, 260, 270).

5. Optical arrangement according to one of Claims 1 to 4, wherein at least one prism for reflecting the incident light beams is used as optical element (250, 260, 270).

6. Optical arrangement according to one of Claims 1 to 5, wherein at least one lens or one lens system for refracting the incident light beams is used as optical element (250, 260, 270).

7. Optical arrangement according to one of Claims 4 and 5, wherein the mirror and/or the prism can be folded out of the at least first and/or at least second beam path (210, 220).

8. Optical arrangement according to one of Claims 1 to 7, wherein the first optical element (250) is a beam splitter, wherein the light beams in the at least first beam path (210) are deflected at a right angle in relation to the incidence direction of the light beams that strike the beam splitter (250), and/or the light beams in the at least second beam path (220) are directed in the direction of the light beams that are incident on the beam splitter (250) such that they continue without deflection.

9. Optical arrangement according to one of Claims 1 to 8, wherein the second and/or third optical element (260, 270) is a mirror and/or prism.

10. Optical arrangement according to one of Claims 1 to 9, wherein a movable stop (225) is arranged in the at least first and/or at least second beam path (210, 220).

11. Optical arrangement according to one of Claims 1 to 10, wherein colour filters for filtering light beams of different wavelengths are arranged in the at least first and/or at least second beam path (210, 220).

12. Optical arrangement according to one of Claims 1 to 11, wherein a dichroic (colour-separating) beam splitter (250) for separating light beams of different wavelengths is provided for the first optical element.

13. Optical arrangement according to one of Claims 1 to 12, wherein the optical elements (250, 260, 270) and the measurement object (280) are arranged such that they can move in relation to one another.

14. Optical arrangement according to one of Claims 1 to 13, wherein the measurement object (280) is arranged by at least one object surface (281, 282) on a beamtransmissive carrier (240), in particular a glass pane.

15. Interferometric arrangement for measuring surfaces (281, 282) of a measurement object (280) having an interferometer measurement head (100, 100a) and an optical arrangement (200, 200a) for illuminating at least one surface of a measurement object according to one of Claims 1 to 14, wherein included are a beamgenerating light source (10, 10a), illumination optics (20) for forming an illumination beam path (30), a beam splitter (50) for splitting the light beams emitted by the light source (10, 10a) into partial light beams, wherein partial light beams are provided at least as measurement beams in a measurement beam path (205) for illuminating a measurement object (280) and at least as reference beams that are directed onto a reference element (75), an objective (80) for forming an imaging beam path (230) of the measurement beams reflected by the measurement object (280), and a detector (90) for imaging the interference pattern from the superposition of the measurement beams reflected by the measurement object (280) and the reference beams, wherein the optical arrangement (200, 200a) for illuminating at least one surface (281, 282) of a measurement object (280) is arranged in the measurement beam path (205) of the interferometer measurement head (100, 100a).

16. Interferometric arrangement according to Claim 15, wherein the light source (10, 10a) emits short-coherent light (white light) or long-coherent light.

17. Interferometric arrangement according to one of Claims 15 to 16, wherein the light source (10, 10a) emits light beams having at least two different wavelengths, in particular in a frequency-shiftable manner, wherein the light beams of in each case one wavelength can be switched on and off.

18. Interferometric arrangement according to one of Claims 15 to 17, wherein the light source (10, 10a) emits light beams with at least two different polarization directions, preferably two light beams which are polarized perpendicular to one another, wherein the light beams of in each case one polarization direction can be switched on and off.

19. Interferometric arrangement according to one of Claims 13 to 16, wherein the interferometer measurement head (100) and the optical arrangement (200, 200a) are arranged such that they are displaceable relative to one another in the direction of the optical axis M of the emerging measurement beams.

## Revendications

1. Agencement optique d'éclairage d'au moins une surface (281, 282) d'un objet de mesure (280) avec les faisceaux lumineux introduits d'une source lumineuse (10) de production de faisceaux, un premier élément optique (250) est disposé de telle sorte pour la formation d'au moins un premier et d'au moins un deuxième passage de faisceau (210, 220) que les faisceaux lumineux sont orientés au moins dans le premier passage de faisceau (210) à travers un deuxième élément optique (260) connecté en aval du premier élément optique (250), perpendiculairement à une première surface d'objet (281), et que les faisceaux lumineux sont orientés au moins dans le deuxième passage de faisceau (220) à travers un troisième élément optique (270) connecté en aval du premier élément optique (250), perpendiculairement à une deuxième surface d'objet (282), et l'au moins un premier passage de faisceau (210) des faisceaux lumineux réfléchis au niveau de la première surface d'objet (281) et l'au moins un deuxième passage de faisceau (220) des faisceaux lumineux réfléchis au niveau de la deuxième surface d'objet (282) se recouvrant au moins en partie dans une zone avec une direction de faisceau orientée parallèlement l'une par rapport à l'autre, **caractérisé en ce que** cette zone est exempte de phénomènes d'interférence.

2. Agencement optique selon la revendication 1, les faisceaux lumineux rencontrant perpendiculairement la première surface d'objet (281) au moins dans le premier passage de faisceau (210) étant orientés parallèlement ou antiparallèlement aux faisceaux lumineux rencontrant perpendiculairement la deuxième surface d'objet (282) dans au moins le deuxième passage de rayonnement (220).

3. Agencement optique selon l'une quelconque des revendications 1 à 2, l'élément optique (250, 260, 270) utilisé étant au moins un diviseur de faisceau permettant de diviser les faisceaux lumineux incidents en au moins des faisceaux lumineux allant dans au moins un premier passage de faisceau (210) et des faisceaux lumineux allant dans au moins un deuxième passage de faisceau (220).

4. Agencement optique selon l'une quelconque des revendications 1 à 3, l'élément optique (250, 260, 270) utilisé étant au moins un miroir permettant de réfléchir les faisceaux lumineux incidents.

5. Agencement optique selon l'une quelconque des revendications 1 à 4, l'élément optique (250, 260, 270) utilisé étant au moins un prisme permettant de réfléchir les faisceaux lumineux incidents.

6. Agencement optique selon l'une quelconque des revendications 1 à 5, l'élément optique (250, 260, 270) utilisé étant au moins une lentille ou un système de lentilles permettant de dévier les faisceaux lumineux incidents.

7. Agencement optique selon l'une quelconque des revendications 4 et 5, le miroir et/ou le prisme pouvant être rabattus vers l'extérieur à partir de l'au moins un premier et/ou de l'au moins un deuxième passage de faisceau (210, 220).

8. Agencement optique selon l'une quelconque des revendications 1 à 7, le premier élément optique (250) étant un diviseur de faisceau, les faisceaux lumineux étant déviés au moins dans le premier passage de faisceau (210) à angle droit par rapport à la direction d'incidence des faisceaux lumineux rencontrant le diviseur de faisceau (250) et/ou les faisceaux lumineux étant orientés sans déviation au moins dans le deuxième passage de faisceau (220) en poursuivant en direction des faisceaux lumineux rencontrant le diviseur de faisceau (250).

9. Agencement optique selon l'une quelconque des revendications 1 à 8, le deuxième et/ou le troisième élément optique (260, 270) étant un miroir et/ou un prisme.

10. Agencement optique selon l'une quelconque des revendications 1 à 9, un diaphragme (225) mobile étant disposé dans au moins le premier et/ou au moins le deuxième passage de faisceau (210, 220).

11. Agencement optique selon l'une quelconque des revendications 1 à 10, des filtres de couleur étant disposés dans au moins le premier et/ou au moins le deuxième passage de faisceau (210, 220) pour filtrer les faisceaux lumineux de différente longueur d'ondes.

12. Agencement optique selon l'une quelconque des revendications 1 à 11, le premier élément optique prévu étant un diviseur de faisceau (250) dicroïque (séparant les couleurs) permettant de diviser les faisceaux lumineux avec une longueur d'ondes différente.

13. Agencement optique selon l'une quelconque des revendications 1 à 12, les éléments optiques (250, 260, 270) et l'objet de mesure (280) étant disposés de façon mobile les uns par rapport aux autres.

14. Agencement optique selon l'une quelconque des revendications 1 à 13, l'objet de mesure (280) étant disposé avec au moins une surface d'objet (281, 282) sur un support (240) laissant passer les faisceaux, notamment une plaque de verre.

15. Agencement interférométrique de mesure de surfaces (281, 282) d'un objet de mesure (280) avec une tête de mesure à interféromètre (100, 100a) et un agencement optique (200, 200a) d'éclairage d'au moins une surface d'un objet de mesure selon l'une quelconque des revendications 1 à 14, une source lumineuse (10, 10a) produisant un rayonnement, un système optique d'éclairage (20) permettant de former un passage de faisceau lumineux (30), un diviseur de faisceau (50) permettant de diviser les faisceaux lumineux émis par la source lumineuse (10, 10a) en faisceaux lumineux partiels, les faisceaux lumineux partiels prévus prenant au moins la forme de faisceaux de mesure dans un passage de faisceau (205) permettant d'éclairer un objet de mesure (280) et au moins la forme de faisceaux de référence orientés sur un élément de référence (75), un objectif (80) permettant de former un passage de faisceau d'image (230) des faisceaux réfléchis par l'objet de mesure (280) et un détecteur (90) permettant de représenter un modèle d'interférence à partir de la superposition des faisceaux de mesure réfléchis par l'objet de mesure (280) et des faisceaux de référence étant contenus, l'agencement optique (200, 200a) d'éclairage d'au moins une surface (281, 282) d'un objet de mesure (280) étant disposé dans le passage de faisceau (205) de la tête de mesure à interféromètre (100, 100a).

16. Agencement interférométrique selon la revendication 15, la source lumineuse (10, 10a) émettant de la lumière à cohérence courte (lumière blanche) ou de la lumière à cohérence longue.

17. Agencement interférométrique selon l'une quelconque des revendications 15 à 16, la source lumineuse (10, 10a) émettant des faisceaux lumineux avec au moins deux longueurs d'ondes différentes, notamment par déplacement de fréquences, les faisceaux lumineux pouvant respectivement être connectés et déconnectés d'une longueur d'ondes.

18. Agencement interférométrique selon l'une quelconque des revendications 15 à 17, la source lumineuse (10, 10a) émettant des faisceaux lumineux avec au moins deux directions de polarisation différentes, de préférence deux faisceaux lumineux polarisés perpendiculairement l'un par rapport à l'autre, les faisceaux lumineux pouvant respectivement être connectés et déconnectés d'une direction de polarisation.

19. Agencement interférométrique selon l'une quelconque des revendications 13 à 16, la tête de mesure à interféromètre (100) et l'agencement optique (200, 200a) pouvant être déplacés l'un par rapport à l'autre en direction de l'axe optique M des faisceaux de mesure sortants.
